# EUROPEAN PATENT APPLICATION

(11) **EP 1 811 732 A2**
(43) Date of publication of application: **25.07.2007**
(21) Application number: 06252189.3
(22) Date of filing: 24.04.2006
(51) Int. Cl.: H04L 27/26

(54) **Multicarrier signal transmission apparatus with peak power suppression and a method thereof**

(30) Priority: 18.01.2006 JP 2006009938
(71) Applicant: FUJITSU LIMITED, Kawasaki-shi, Kanagawa 211-8588 (JP)
(72) Inventor: Hamada, Hajime c/o Fujitsu Limited, Kawasaki-shi Kanagawa 211-8588 (JP); Kubo, Tokuro c/o Fujitsu Limited, Kawasaki-shi Kanagawa 211-8588 (JP); Nagatani, Kazuo c/o Fujitsu Limited, Kawasaki-shi Kanagawa 211-8588 (JP); Ishikawa, Hiroyoshi c/o Fujitsu Limited, Kawasaki-shi Kanagawa 211-8588 (JP); Fudaba, Nobukazu c/o Fujitsu Limited, Kawasaki-shi Kanagawa 211-8588 (JP)
(74) Representative: Hitching, Peter Matthew

(57) **Abstract**

A multicarrier signal transmission apparatus provided with a hard clip suppression unit for hard clipping a peak part of a multicarrier signal, a low pass filter (6) for filtering the signal hard clipped by the hard clip suppression unit, and a peak suppression unit (7) for suppressing the peak part of the signal after filtering by the low pass filter, the peak suppression unit (7) provided with a peak detection unit (10) for detecting a peak part of the filtered signal, a window function generation unit (20) for generating a window function of an amplitude in accordance with a peak level of the peak part, and a peak suppressor (30) for attenuating the peak part in accordance with the value of the window function.

## Description

### CROSS REFERENCE TO RELATED APPLICATION

This application is based upon and claims the benefit of priority from the prior Japanese Patent Application No. 2006-9938, filed on January 18, 2006, the entire contents of which are incorporated herein by reference.

### BACKGROUND OF THE INVENTION

### 1. Field of the Invention

The present invention relates to a transmission apparatus for a multicarrier signal combining a plurality of modulated signals, more particularly relates to a transmission apparatus for suppressing the peak power of a multicarrier signal to improve a peak-to-average power ratio (PAPR).

### 2. Description of the Related Art

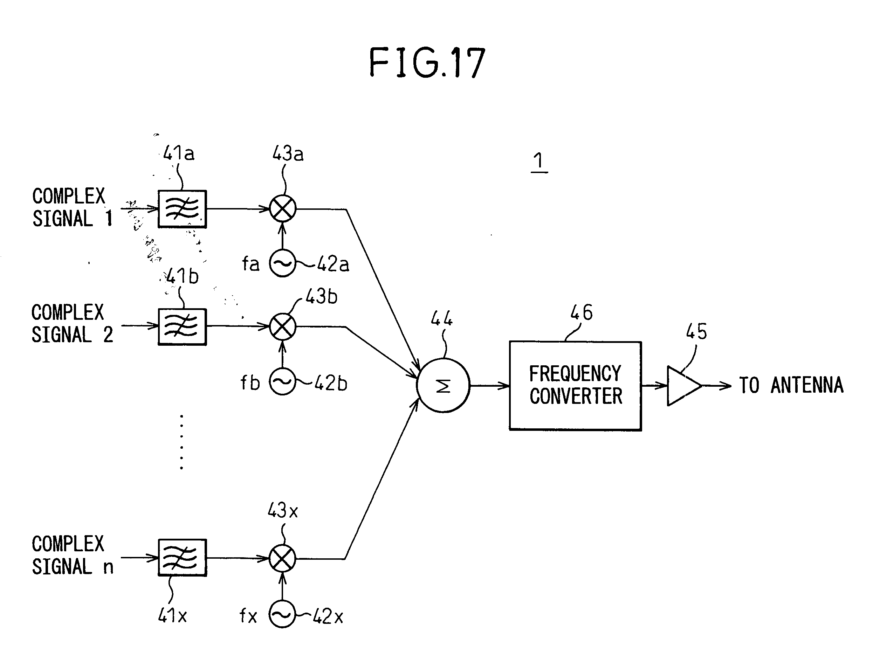

Digital wireless communication systems use multicarrier modulation schemes for combining a plurality of band-limited carrier signals and transmitting them by a high frequency carrier. FIG. 17 is a schematic view of the configuration of a conventional digital wireless transmission apparatus for multicarrier modulation.

As illustrated, the transmission apparatus 1 limits the bands of a plurality of digital baseband signals comprised of the complex signal 1, complex signal 2... complex signal n, by the band-limiting filters 41a, 41b... 41x. After this, sine wave generators 42a, 42b... 42x generate different frequency fa, fb... fx complex sine waves e^{jωt} (ω=2πfa, 2πfb... 2πfx), while complex multipliers 43a, 43b... 43x multiply the same with the complex signal 1, complex signal 2... complex signal n to shift them to the frequencies.

Further, the band-limited and frequency-shifted complex signal 1 to complex signal n are combined by a multicarrier combiner 44. The combined multicarrier signal is converted by a frequency converter 46 to the wireless frequency band, amplified through a transmission amplifier 45 to the desired transmission power, then transmitted by a not shown antenna unit.

In the currently used digital wireless communication systems, linear amplification is required at the transmission amplifier at the transmitting end. The transmission amplifier is therefore used in the linear region where the input power and output power are substantially proportional in relationship.

Further, in a digital wireless communication system, a multicarrier modulation scheme combining a plurality of band-limited carrier signals and transmitting them by a high frequency carrier is used. In general, however, if combining a plurality of carrier signals at the transmitting end of wireless transmission, the peak-to-average power ratio (PAPR) of the obtained multicarrier signal becomes large. Therefore, the transmission amplifier 45 of the transmitting end employing the multicarrier modulation scheme has to be designed with a large backoff power to enable operation in the linear region even for an input signal with a large peak-to-average power ratio (PAPR). The efficiency of the amplifier therefore drops. That is, a larger amount of consumed power is used for the same transmission power.

Roughly classifying the methods for suppressing the peak parts of a multicarrier signal proposed in the past to prevent such an increase in the peak-to-average power ratio (PAPR), the following three types may be mentioned.

The first peak suppression method is the method of attenuating the plurality of modulated signals to be combined before multicarrier combination so as to suppress the peaks of the multicarrier signal. Examples of this are disclosed in Japanese Unexamined Patent Publication (Kokai) No. 2002-305489, Japanese Unexamined Patent Publication (Kokai) No. 2003-46480, Japanese Unexamined Patent Publication (Kokai) No. 2004-64711, and Japanese Unexamined Patent Publication (Kokai) No. 11-313042). For example, Japanese Unexamined Patent Publication (Kokai) No. 2002-305489 discloses simulating the multicarrier signal obtained by combining a plurality of modulated signals so as to detect the peak parts and attenuating the parts corresponding to the detected peak parts in the plurality of modulated signals.

The second peak suppression method is a hard clip type peak suppression method after multicarrier combination. It cuts the parts exceeding a certain threshold of amplitude in the obtained multicarrier signal.

Further, the third peak suppression method is a method of suppressing the peak parts of a multicarrier signal using a filter after multicarrier combination.

In addition, Japanese Unexamined Patent Publication (Kokai) No. 2004-128923 discloses a method of determining a target value for suppressing the peak voltage of an input signal based on an envelope level of the input signal and a predetermined threshold and calculating the gain with respect to the input signal from the results of passing the product of the envelope level and target value and the square of the envelope through a moving average filter or FIR filter.

Japanese Unexamined Patent Publication (Kokai) No. 7-321861 discloses a method of limiting the amplitude to an amplitude level preset for the multicarrier signal, then generating an interpolated waveform, so as to limit the band.

Japanese Unexamined Patent Publication (Kokai) No. 2002-77097 discloses a method of suppression comprising evenly suppressing the multicarrier signal as a whole and clipping only the parts generating peak voltages.

Japanese Unexamined Patent Publication (Kokai) No. 2004-135087 discloses a method of applying an inverse Fourier transform to a carrier to obtain a basic function in a multicarrier modulation scheme and subtracting the signals of the products of the waveform of this basic function shifted to a peak position of an orthogonal amplitude signal and peak parts exceeding the threshold in the orthogonal amplitude signal from the orthogonal amplitude signal to suppress the peak parts.

In the second peak suppression method among the above conventional proposals, that is, the hard clip type peak suppression method, since only the signal part exceeding a predetermined threshold is cut, there is the advantage that the drop in the quality of reception due to the peak suppression can be kept to a minimum.

On the other hand, the hard clip type peak suppression method causes a high frequency component in the multicarrier signal, so increases the spurious wave outside of the band and causes degradation of the adjacent channel leakage power ratio (ACLR).

### SUMMARY OF THE INVENTION

An object of the present invention is to provide a peak suppression method for a multicarrier signal while makes use of the advantage of the hard clip type peak suppression method of only a small drop in the quality of reception while prevents the occurrence of an out-band spurious wave so as to achieve a good balance of the quality of reception and the ACLR.

To achieve the above object, according to the prevent invention, the peak part of a multicarrier signal obtained by limiting a plurality of modulated signals in band and combining the results is hard clipped, then the hard clipped signal is filtered by a low pass filter and the peak part of the filtered signal is suppressed by peak suppression using a window function.

The "peak suppression using a window function" referred to here is realized by detecting the peak part of a filtered signal, generating a window function of an amplitude corresponding to the peak level of the peak part, then attenuating the peak part in accordance with the value of the window function.

The basic operation of the suppression of the peak part of the multicarrier signal according to the present invention is as follows.

First, the peak part of the multicarrier signal right after composition is hard clipped to cut the peak part of the multicarrier signal. By cutting the peak part, the peak part of the hard clipped signal is suppressed, but on the other hand the out-band spurious wave increases and the ACLR deteriorates.

Next, the hard clipped signal is passed through the low pass filter to remove the out-band spurious wave and thereby substantially completely suppress the degradation of the ACLR of the signal. In this way, by the joint use of peak suppression by the hard clip method and the removal of the out-band spurious wave by a low pass filter, degradation of the quality of reception is suppressed and generation of an out-band spurious wave is prevented.

However, the signal after passing through the low pass filter is restored to an extent in its original signal waveform and the peak suppressed once by the hard clip is regenerated, so the peak-to-average-power ratio PAPR becomes larger.

Therefore, finally, the peak suppression using the above window function is used to suppress the peak part of the filtered signal and thereby reduce the PAPR.

In this peak suppression using a window function, for example, the window function is generated based on a cos window function, cos² window function, cos³ window function, cos⁴ window function, Hanning window function, Hamming window function, Kaiser window function, Blackman-Harris window function, etc. and the signal values of the filtered signal are attenuated in accordance with the value taken by the window function. The above illustrated functions change smoothly in function value along with time, so by attenuating the signal values of the different times in accordance with the values of the functions, it is possible to suppress the peak part without generation of almost any out-band spurious wave (that is, without degradation of the ACLR).

Further, the amplitude of the window function showing the amount of suppression may be determined in accordance with the peak level of the peak part of the filtered signal. This enables unnecessarily large peak suppression to be avoided and thereby enables a good quality of reception to be maintained.

### BRIEF DESCRIPTION OF THE DRAWINGS

These and other objects and features of the present invention will become clearer from the following description of the preferred embodiments given with reference to the attached drawings, wherein:
FIG. 1 is a schematic view of a first embodiment of a multicarrier signal transmission apparatus according to the present invention;
FIG. 2 is a schematic view of the configuration showing an example of the configuration of the hard clip suppression unit shown in FIG. 1;
FIG. 3A is a view showing the changes along with time in a multicarrier signal at the positions A, B, C, and D of the multicarrier signal transmission apparatus shown in FIG. 1;
FIG. 3B is a view of the frequency spectrum of the signals of FIG. 3A;
FIG. 4 is a schematic view of the configuration showing a first example of the configuration of the peak suppression unit shown in FIG. 1;
FIG. 5 is a view of an example of a window function generated by the window function generation unit shown in FIG. 4;
FIG. 6A is a view showing a signal before peak suppression by the peak suppression unit illustrated in FIG. 4;
FIG. 6B is a view of a window function multiplied with the peak part of the signal of FIG. 6A;
FIG. 6C is a view of a signal generated by multiplication of the window function of FIG. 6B with the signal of FIG. 6A;
FIG. 7 is a schematic view of the configuration of a second example of the configuration of the peak suppression unit shown in FIG. 1;
FIG. 8A is a view showing a signal before peak suppression by the peak suppression unit illustrated in FIG. 7;
FIG. 8B is a view of the signal of FIG. 8A after being delayed by a delay element;
FIG. 8C is a view of a window function multiplied with the signal of FIG. 8B;
FIG. 9 is a schematic view of the configuration of a third example of the configuration of the peak suppression unit shown in FIG. 1;
FIG. 10A is a view showing a signal before peak suppression by the peak suppression unit illustrated in FIG. 9;
FIG. 10B is a view of the window function multiplied with the peak part of the signal of FIG. 10A;
FIG. 10C is a view of a signal generated by multiplication of the window function of FIG. 10B with the signal of FIG. 10A;
FIG. 11 is a schematic view of the configuration of a fourth example of the configuration of the peak suppression unit shown in FIG. 1;
FIG. 12 is a schematic view of the configuration of a fifth example of the configuration of the peak suppression unit shown in FIG. 1;
FIG. 13A is a view explaining the generation of window functions based on symmetry and shows the case of generating all window functions from a 1/2 part of the window functions;
FIG. 13B is a view explaining the generation of window functions based on symmetry and shows the case of generating all window functions from a 1/4 part of the window functions;
FIG. 14 is a schematic view of the configuration of a sixth example of the configuration of the peak suppression unit shown in FIG. 1;
FIG. 15A is a view of a signal before peak suppression by the peak suppression unit illustrated in FIG. 14;
FIG. 15B is a view of a window function multiplied with the peak part of the signal of FIG. 15A;
FIG. 15C is a view of the amount of attenuation by the window functions of FIG. 15B;
FIG. 16 is a schematic view of the configuration of a second embodiment of the multicarrier signal transmission apparatus according to the present invention; and
FIG. 17 is a schematic view of the configuration of a conventional transmission apparatus for multicarrier modulation.

### DESCRIPTION OF THE PREFERRED EMBODIMENTS

Preferred embodiments of the present invention will be described in detail below while referring to the attached figures.

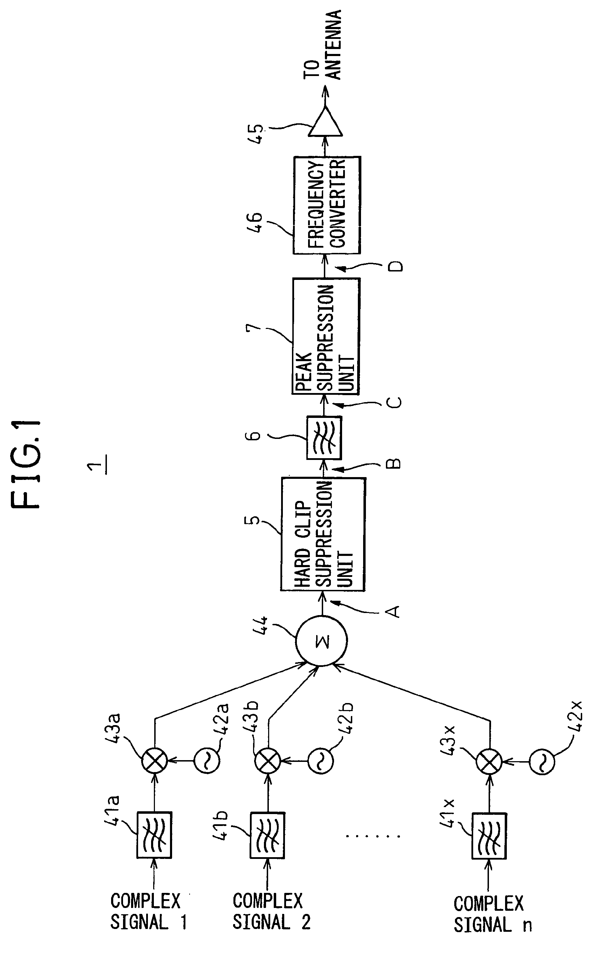

FIG. 1 is a schematic view of the configuration of a first embodiment of a multicarrier signal transmission apparatus according to the present invention. As illustrated, the transmission apparatus 1 over-samples, then limits the bands of the plurality of digital baseband signals comprised by the complex signal 1, complex signal 2... complex signal n by band-limiting filters 41a, 41b... 41x, respectively.

After this, sine wave generators 42a, 42b... 42x generate different frequency fa, fb... fx complex sine waves e^{jωt} (ω=2πfa, 2πfb... 2πfx), while complex multipliers 43a, 43b... 43x multiply the same with the complex signal 1, complex signal 2... complex signal n respectively to shift them to the frequencies.

Further, the complex signal 1 to complex signal n shifted to the frequencies and band limited are combined by a multicarrier combiner 44 into a multicarrier signal.

The combined multicarrier signal is successively input to the later explained hard clip suppression unit 5, low pass filter 6, and later explained peak suppression unit 7 where its peak parts are suppressed. The multicarrier signal suppressed in peak parts is converted by the frequency converter 46 to the wireless frequency band, amplified through a transmission amplifier 45 to the desired transmission power, then transmitted from a not shown antenna unit.

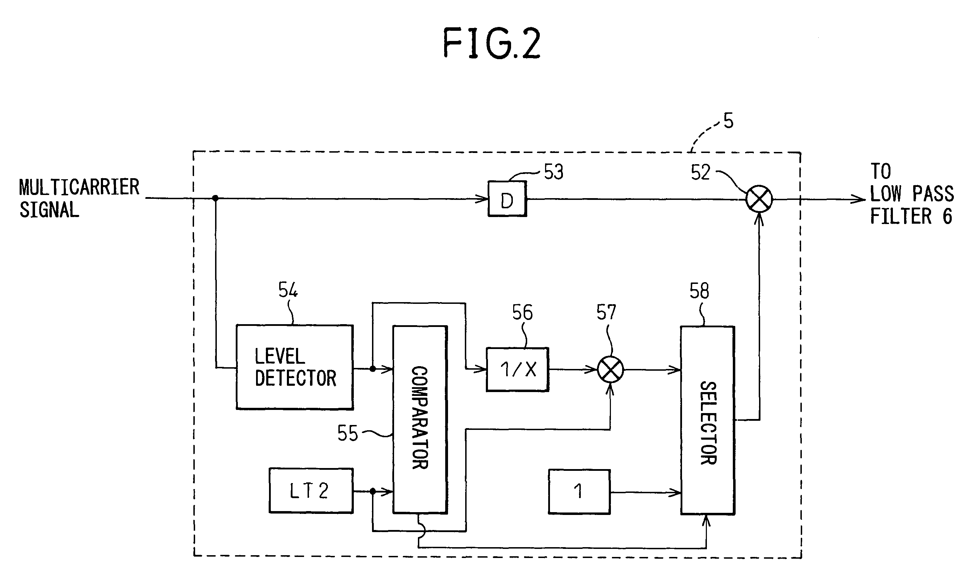

FIG. 2 is a schematic view of the configuration of an example of the configuration of the hard clip suppression unit 5 shown in FIG. 1. The hard clip suppression unit 5 is provided with a level detector 54 for detecting the level of a multicarrier signal, a comparator 55 for comparing the signal level of the multicarrier signal and a predetermined level threshold LT2 and outputting the results of comparison, a reciprocal calculator 56 for calculating the reciprocal of the signal level of the multicarrier signal, a multiplier 57 for multiplying the reciprocal of the signal level of the multicarrier signal and the threshold LT2 to calculate (LT2/signal level), and a selector 58 for selecting the value of (LT2/signal level) when the signal level of the multicarrier signal exceeds the threshold LT2 based on the results of comparison of the comparator 55 and the constant 1 when it does not. The output signal of the selector 58 is multiplied with the multicarrier signal by the multiplier 52.

Due to this configuration, when the signal level of the multicarrier signal exceeds the threshold LT2, the value of (LT2/signal level) is multiplied with the multicarrier signal while when it does not, a constant 1 (equal magnitude) is multiplied with it. As a result, only the signal parts exceeding the level of the threshold LT2 in the multicarrier signal are suppressed and the signal is therefore hard clipped.

Note that the input of the multiplier 52 is provided with a delay element 53 for delaying the multicarrier signal during processing of the level detector 54 to selector 58.

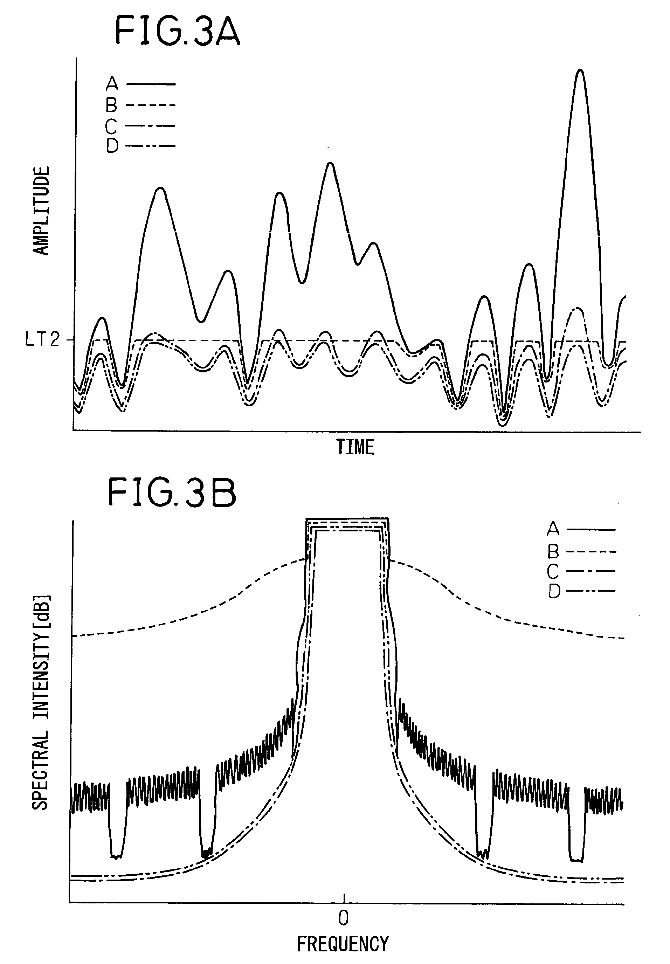

Referring to FIG. 3A and FIG. 3B, the changes in the signal waveform accompanying peak suppression by hard clipping and filtering by the low pass filter 7 will be explained.

FIG. 3A is a view showing the changes along with time in the multicarrier signal at the positions A, B, C, and D of the multicarrier signal transmission apparatus 1 shown in FIG. 1. FIG. 3B is a view of the frequency spectrum of the signals of FIG. 3A. The signal at the position of A shown by the solid line in FIG. 3A and FIG. 3B shows the signal before peak suppression. The signal of the position of B shown by the broken line shows the signal after peak suppression by hard clipping. The signal of the position of C shown by the one-dot chain line shows the signal after filtering by the low pass filter 6. The signal of the position of D shown by the two-dot chain line shows the signal after peak suppression using the window function by the peak suppression unit 7.

As will be understood from the solid line A and the broken line B of FIG. 3A, the multicarrier signal (solid line A) right after being combined has a large amplitude, but after hard clipping by the hard clip suppression unit 5, becomes the original signal from which the peak parts with signal values larger than the predetermined threshold LT2 have been cut (broken line B).

Therefore, as will be understood from the solid line A and the broken line B of FIG. 3B, in the hard clipped signal (broken line B), the high frequency component (out-band spurious wave) is increased. This means deterioration of the ACLR.

By passing the hard clipped signal through the low pass filter 7, the signal waveform returns to the waveform of the original multicarrier signal A to a certain extent as shown by the one-dot chain line C of FIG. 3A. In the spectral intensity shown by the one-dot chain line C of FIG. 3C as well, the high frequency component (out-band spurious wave) is completely removed and the ACLR is greatly improved.

On the other hand, the signal passed through the low pass filter 7, as shown in FIG. 3A, again exhibits the peaks suppressed by the former hard clip suppression unit 5 and again has the peak-to-average power ratio PAPR become larger as shown in FIG. 3A.

Therefore, the peak suppression unit 7 explained below is provided after the low pass filter 7 so as to suppress the peak parts reappearing in the signal after passing through the low pass filter 7 and improve the PAPR.

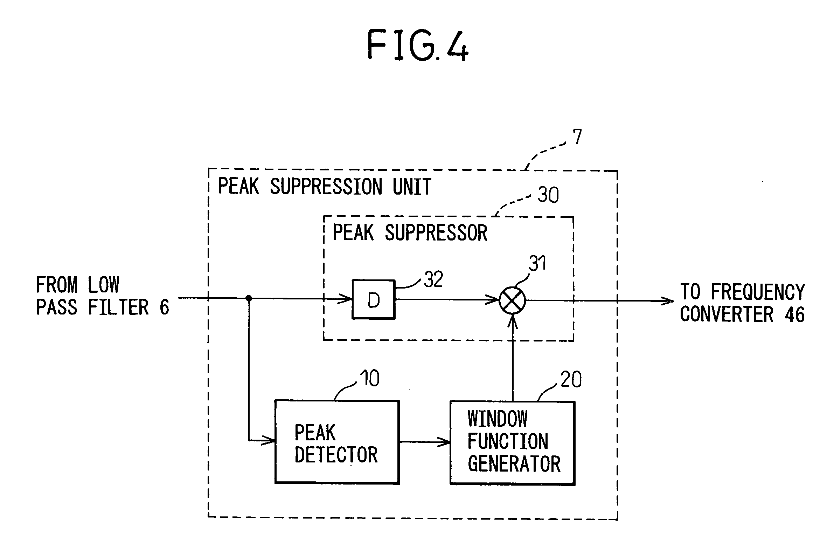

FIG. 4 is a schematic view of the configuration of a first example of the configuration of the peak suppression unit 7 shown in FIG. 1. As shown in the figure, the peak suppression unit 7 is comprised of a peak detector 10, a window function generator 20, and a peak suppressor 30.

The peak detector 10 detects the peak levels of the peak parts having peaks exceeding the predetermined level threshold LT appearing in the signal after filtering by the low pass filter 7 (below, called the "filtered signal") and outputs them to the window function generator 20.

The window function generator 20 generates window functions of amplitudes in accordance with the peak levels of the peak parts detected.

The peak suppressor 30 attenuates the values of the peak parts of the different times in accordance with the values of the times of the window functions generated by the window function generator 20. For example, the peak suppressor 30 attenuates the peak parts by multiplying the values of the window functions at the different times with the values of the peak parts at the different times.

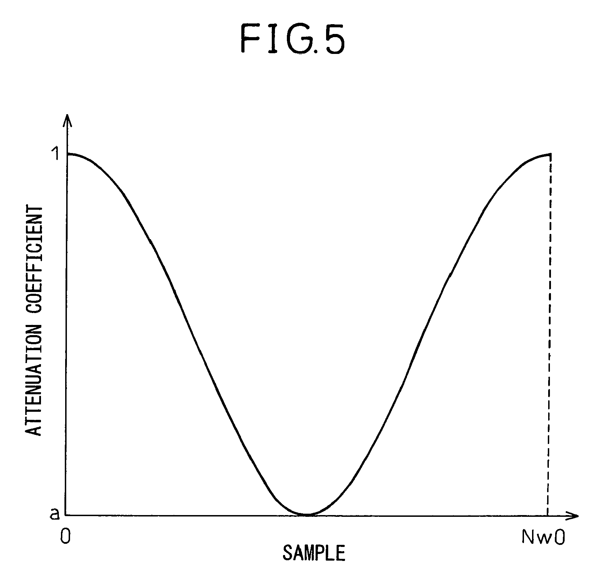

FIG. 5 shows an example of a window function generated by the window function generator 20 shown in FIG. 4. As shown in FIG. 5, a "window function" is a function showing the amount of attenuation (attenuation coefficient) at each sample (time) with respect to the multicarrier signal determined in a finite sample number width Nw0. The window function in the example illustrated is a cos window function expressed by the following formula (1):

(1-a)*(1+cosθ)/2+a (0≤θ≤2π/Nw0) (1)

Here, if assuming attenuation by the maximum attenuation width 1 [dB] in the Nw0/2th sample, it is sufficient to set a=0.891.

The window function generated by the window function generator 20 is multiplied by the peak suppressor 30 with the filtered signal. The peak suppressor 30 is provided with a multiplier 31 for this. The peak suppressor 30 is also provided with a delay element 32 which delays the input signal by

(Nw0/2)*ΔTs+Td0 (2)

so as to multiply the input signal, that is, the filtered signal, and the window function while matching the center of the peak position of the detected peak part and the center of the window function. Here, ΔTs shows the sampling time of the multicarrier signal, while Td0 is the delay time required for the processing in the peak detector 10 and the window function generator 20.

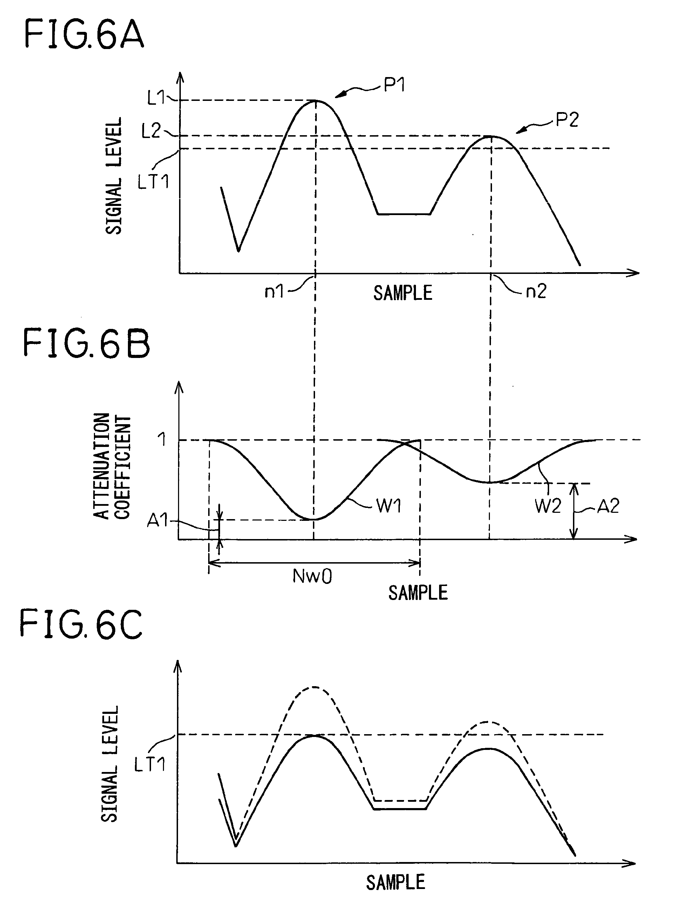

FIG. 6A shows a signal before peak suppression by the peak suppression unit 7 shown in FIG. 4, FIG. 6B shows window functions multiplied with the peak parts of the signal of FIG. 6A, and FIG. 6C shows a signal after multiplication of the window functions of FIG. 6B with the signal of FIG. 6A.

As shown in FIG. 6A, the filtered signal is assumed to have peak parts P1 and P2 with peak values exceeding a predetermined level threshold LT1 at the (n1)th sample and (n2)th sample. The peak detector 10 of FIG. 4 detects these peak parts P1 and P2.

Further, the window function generator 20 generates window functions w1 and w2 having amplitudes A1 and A2 proportional to the ratios of the peak levels L1 and L2 of these peak parts P1 and P2 and the level threshold LT1. The generated window functions w1 and w2 are shown in FIG. 6B.

Further, the multiplier 31 of the peak suppressor 30 multiplies the peak parts P1 and P2 of the filtered signal with the window functions w1 and w2. At this time, the multicarrier signal is delayed by the delay element 32 by (Nw0/2)*ΔTs+Td0, so the window functions w1 and w2 are multiplied centered at the peak positions of the peak parts P1 and P2.

Due to this, by suitably setting the amplitudes of the window functions, it is possible to suppress the peak levels of the filtered signal to below a predetermined level threshold LT1 as shown in FIG. 6C.

At this time, by setting the period widths and amplitudes of the window functions small, the width of the filtered signal which is suppressed becomes smaller and the quality of reception is improved, while conversely the effect of improvement of the PAPR is small. Conversely, if setting the period widths or amplitude of the window functions large, a large improvement in the PAPR may be expected, but the quality of reception deteriorates. Therefore, by suitably setting the period widths and amplitudes showing the amount of suppression in accordance with the peak levels of the peak parts of the filtered signal, it is possible to avoid unnecessarily large peak suppression and thereby maintain a good quality of reception.

Note that it is possible to select as the window functions a cos window function, cos² window function, cos³ window function, cos⁴ window function, Hanning window function, Hamming window function, Kaiser window function, Blackman-Harris window function, or other function with a gentle time change and attenuate the signal values of the different timings in accordance with the values of these functions so as to suppress the peak parts reappearing after filtering without causing almost any out-band spurious waves (without causing deterioration of the ACLR).

Due to the above functions of the peak suppression unit 7, the peak parts reappearing at the signal after passing through the low pass filter 7 are suppressed. The two-dot chain lines D of FIG. 3A and 3B show the signal waveform and frequency spectrum after peak suppression using a cos window function suitably set in period width and amplitude.

Referring to FIG. 3A, it will be understood that the peak parts reappearing in the filtered signal shown by the one-dot chain line C are suppressed again by the peak suppression unit 7 as shown by the two-dot chain line D. Further, referring to FIG. 3B, it will be understood that the peak suppression by the peak suppression unit 7 does not generate almost an out-band spurious waves and does not degrade the ACLR.

Further, the window function generator 20 may generate window functions having amplitudes proportional to the differences between the peak levels of the peak parts and the level threshold LT1. It is also possible to generate window functions having amplitudes proportional to the peak levels of the peak parts. Further, the window function generator 20 may also generate window functions of amplitudes having monotonously increasing relationships with the ratios of the peak levels of the peak parts and the level threshold LT1 or may also generate window functions of amplitudes having monotonously increasing relationships with the peak levels of the peak parts.

Further, the peak suppressor 30 has the multiplier 31 multiply the multicarrier signal with the window functions so as to attenuate the peak parts, but the means for attenuating the multicarrier signal is not limited to this. It is also possible to use means enabling attenuation of the multicarrier signal in accordance with the values of the window functions.

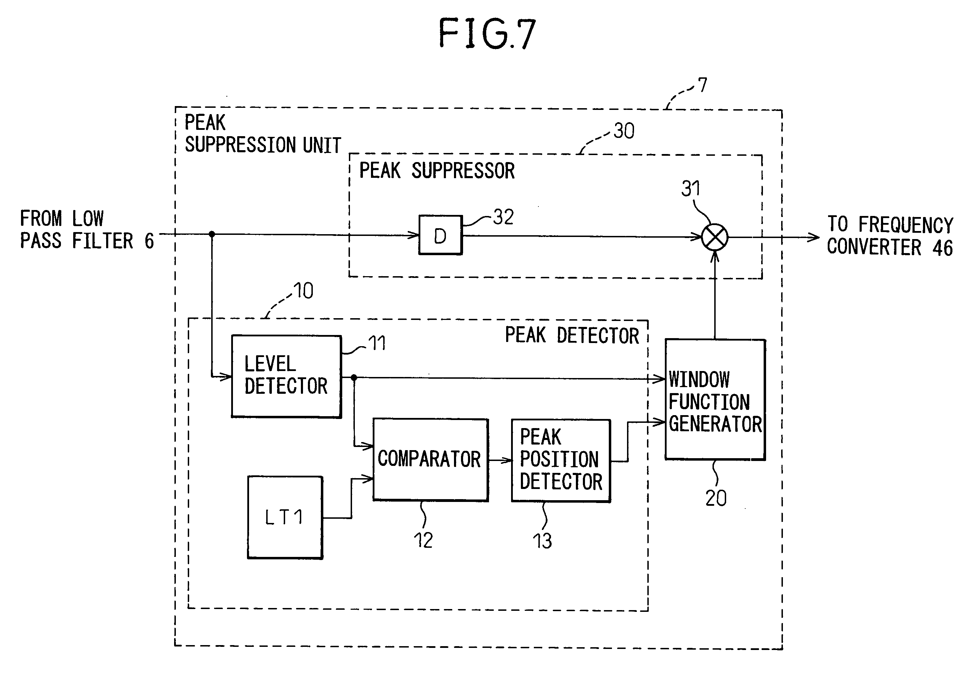

FIG. 7 is a schematic view of the configuration of a second example of the configuration of the peak suppression unit 7 shown in FIG. 1. The configuration shown in FIG. 7 shows the configuration of the peak detector 10 in the peak suppression unit 7 shown in FIG. 4 in more detail.

The peak detector 10 is provided with a level detector 11 for detecting the level of an input signal, a comparator 12 for comparing a detected level and predetermined level threshold LT1, and a peak position detector 13 for detecting the peak positions of the signals of the peak parts of the input signal when the level of the detected input signal is over the level threshold LT1.

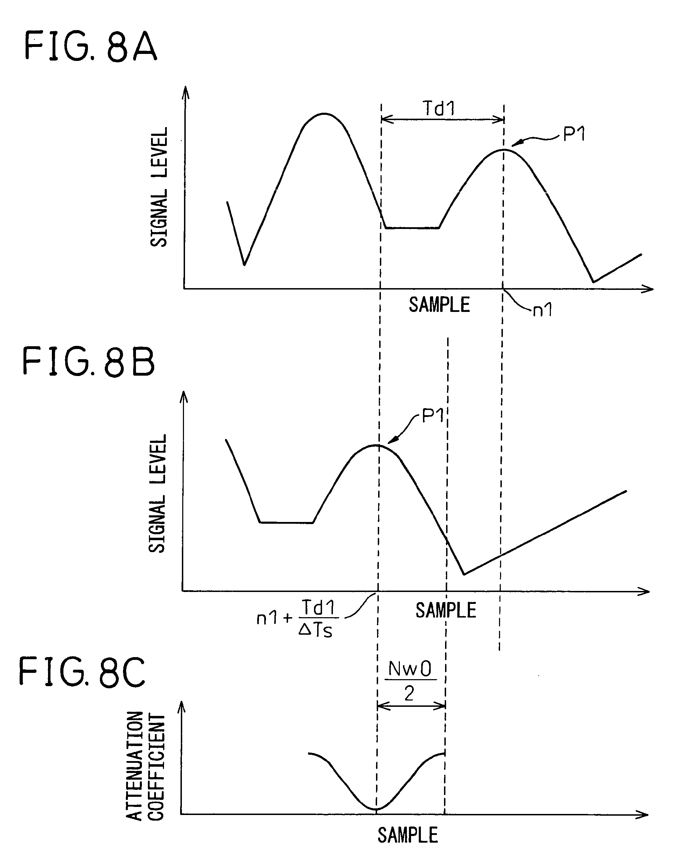

Further, at the point of time when the peak positions are detected, the window function generator 20 determines the amplitudes of the windows functions in accordance with the detection levels and generates window functions matching the timings centered on the peak positions. Further, it multiplies them with the values of the input signal at the different times by the multiplier 31. This state is shown with reference to FIG. 8.

FIG. 8A shows the input signal before peak suppression by the peak suppression unit 7 shown in FIG. 7. FIG. 8B shows the signal of FIG. 8A after being delayed by the delay element 32. As illustrated, the delay element 32 is set so as to delay the multicarrier signal by the predetermined time Td1. Further, FIG. 8C shows the window function multiplied with the signal of FIG. 8B.

If the level detector 11 and comparator 12 detect the peak position P1 and the peak position detector 13 determines that the peak position of the peak part P1 is the (n1)th sample, as shown in FIGS. 8B and 8C, the window function generator 20 generates a window function centered on the (n1+(Td1/ΔTs))th sample. Therefore, when making the width of the window function generated Nw0, the window function generator 20 starts the generation of the window function after the elapse of the time (Td1-(Nw0/2*ΔTs)) after detection of the (n1) th sample.

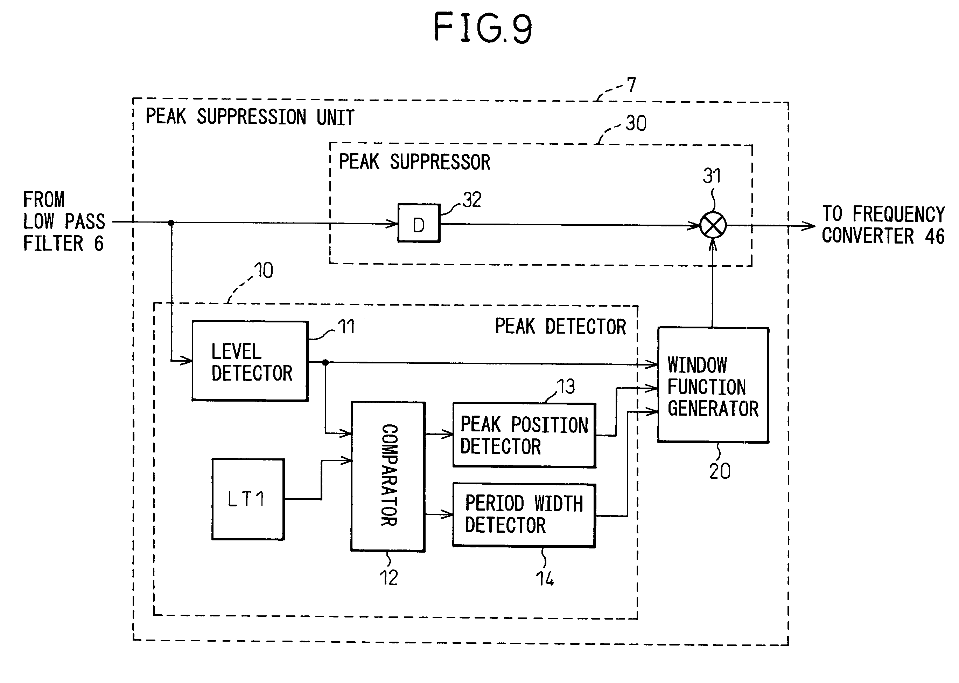

FIG. 9 is a schematic view of the configuration of a third example of the configuration of the peak suppression unit 7 shown in FIG. 1. In this example, the peak detector 10 is provided with a period width detector 14. The period width detector 14 detects the period widths of the peak parts of the input signal when the level of the detected input signal is over the level threshold LT1. The period widths of the peak parts may be set as period widths whereby the level of the input signal becomes over the level threshold LT1, may be set as period widths whereby it becomes at least another suitable level threshold, or may be set by detecting the half-value width of the peak parts.

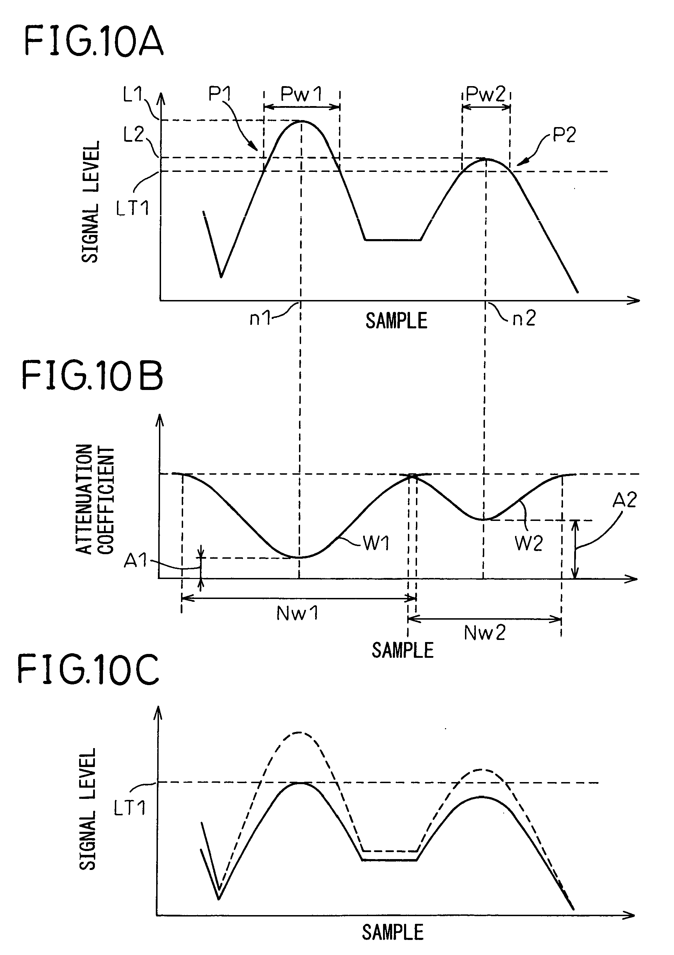

The window function generator 20 determines the amplitudes in accordance with the detected level and generates window functions matched with timings centered on the peak positions. At this time, the period widths of the window functions generated are changed in proportion to the period widths detected by the period width detector 14 for the peak parts. An example of the control of the period widths of the window functions will be explained with reference to FIG. 10A to FIG. 10C.

For example, as shown in FIG. 10A, assume that the peak part P1 of the input signal has a peak level L1 and a period width Pw1, while the peak part P2 has a peak level L2 and period width Pw2 (in this example, the period width is shown as a period width exceeding the level threshold LT1).

The window function generator 20 determines the amplitude A1 of the window function w1 applied to the peak part P1 in accordance with the detected peak level L1 and determines the period width Nw1 of the window function w1 in accordance with the detected period width Pw1. Further, it determines the amplitude A2 of the window function w2 applied to the peak part P2 in accordance with the detected peak level L2 and determines the period width Nw2 of the window function w2 in accordance with the detected period width Pw2.

By calculating the amplitudes, widths, etc. of the window functions in accordance with the magnitudes of the peak parts, it becomes possible to realize more flexible peak suppression and becomes possible to balance the quality of reception and ACLR optimally.

Note that in the above example, the window function generator 20 changed the period widths of the window functions proportionally to the period widths of the peak parts, but the invention is not limited to this. The window function generator 20 may also change the period widths of the window functions so that the period widths of the peak parts and period widths of the window functions have a simple monotonously increasing relationship. Further, the window function generator 20 may also change the period widths of the window functions in accordance with the ratios of the peak level values and period widths of the peak parts.

In the first to third examples, the window function generator 20 may also determine the values of the window functions at the different times by entering the sampling times in a predetermined calculation formula as in the above formula (1). By the window function generator 20 being able to freely calculate the types, shapes, widths, etc. of the window functions by a predetermined calculation formula in this way, it is possible to dynamically change the balance between the quality of reception and the ACLR.

On the other hand, the window function generator 20 may also store master window functions forming the basis for generating the window functions in advance in a window function table and use the values of the table to determine the value of the window functions. This enables elimination of the complicated function processing for generating the window functions, so realization by hardware becomes easy.

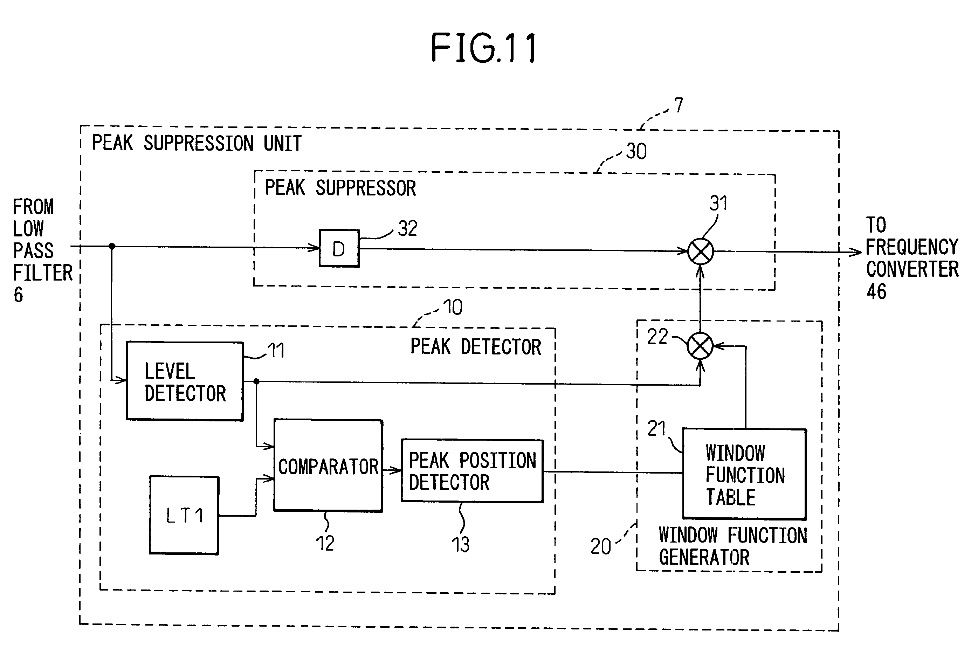

The configuration for generating window functions by such a window function table will be shown in FIG. 11.

FIG. 11 is a schematic view of the configuration of a fourth example of a peak suppression unit 7 shown in FIG. 1. In this example, the window function generator 20 is provided with a window function table 21 realized by storing master window functions in a ROM, RAM, or other storage unit and a multiplier 22 for multiplying the peak levels of peak parts detected by the level detector 11 with a value of a function stored in the window function table 21.

Here, a "master window function" is a function forming the basis for an actual window function and used by the window function generator 20 for generating an actual window function used for attenuation of a multicarrier signal and includes for example shape features of actual window functions. In particular, such a master window function is a function which can generate an actual window function by scaled in the time axis (sample axis direction, abscissa direction) and/or attenuation coefficient direction (ordinate direction). That is, it is a function which can generate an actual window function by changing the amplitude and/or changing the period width (sample width).

Table 1 shows an example of the content of the window function table 21.

**Table 1. Example of Window Function Table**

| Sample | Value of window function |
|---|---|
| 0 | 1.000 |
| 1 | 0.999 |
| 2 | 0.995 |
| 3 | 0.990 |
| 4 | 0.982 |
| | |
| 11 | 0.909 |
| 12 | 0.901 |
| 13 | 0.896 |
| 14 | 0.892 |
| 15 | 0.891 |
| 16 | 0.892 |
| 17 | 0.896 |
| 18 | 0.901 |
| 19 | 0.909 |
| | |
| 26 | 0.982 |
| 27 | 0.990 |
| 28 | 0.995 |
| 29 | 0.999 |
| 30 | 1.000 |

The above example of a window function table is a window function table corresponding to the window functions shown in FIG. 5. Here, it is calculated assuming a=0.891 and a sample number Nw0 of 30.

As shown in Table 1, the window function table 21 stores function values at different times (sample numbers) calculated in advance by a calculation formula such as the above formula (1) (determined in accordance by a master window function) for a predetermined one or more master functions.

The window function generator 20 successively reads out values of the master window functions stored at the window function table 21 matched in timing so as to make the peak positions detected by the peak position detector 13 the centers of the window functions. By multiplying the peak levels of the peak parts detected by the level detector 11 with the read out function values, the amplitudes of the window functions in the table 21 are changed in accordance with the peak level to generate new window functions.

When employing window functions having symmetry as window functions applied to the peak parts of the filtered signal, it is also possible that the window function table 21 stores only part of the master window functions and the window function generator 20 generate all of the window functions from the part of the master window functions stored in the window function table based on the symmetry.

In this way, by storing only part of the master window functions, it becomes possible to save the storage capacity of the window function table 21. Further, the processing for generating all of the window functions from the part of the master window functions based on the symmetry of the functions is extremely simple, so the advantages of this example of configuration are not impaired.

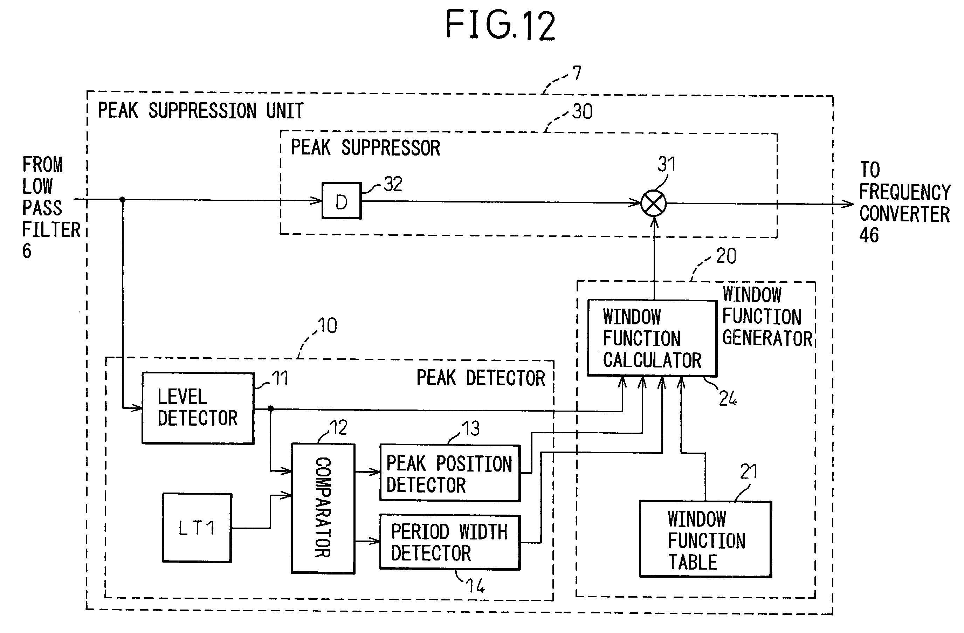

FIG. 12 is a schematic view of a fifth example of the configuration of the peak suppression unit 7 shown in FIG. 1. This example stores only part of the master window functions in the window function table and generates the remainder based on symmetry. The window function generator 20 is provided with a window function table 21 storing only part of the master window functions and a window function calculator 24 for generating all of the window functions by simple processing based on symmetry of the master window functions from the master window functions stored in the window function table 21.

Here, as the window functions generated by the window function generator 20, window functions having symmetry are employed. The window functions already explained with reference to FIG. 5 also have symmetry, so a window function table 21 storing only part of the master window functions will be explained as an example of this.

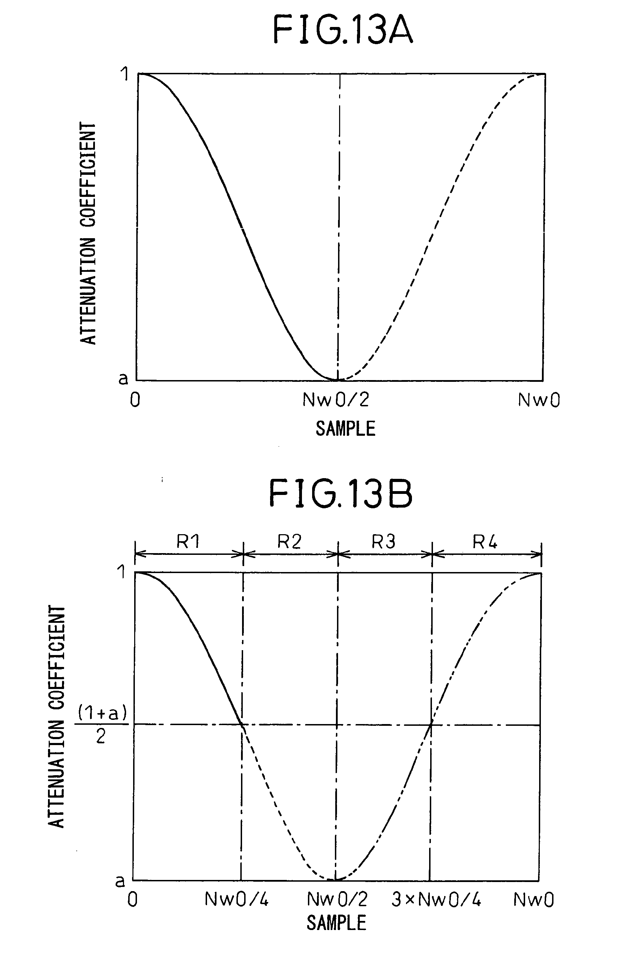

FIG. 13A is a view explaining the generation of window functions based on symmetry and shows the case of generating all window functions from a 1/2 part of the window functions; while FIG. 13B is a view explaining the generation of window functions based on symmetry and shows the case of generating all window functions from a 1/4 part of the window functions.

As shown in FIG. 13A, the window functions shown in FIG. 5 have linear symmetry about the sample no. (time) = Nw0/2. Therefore, only the half of the master window functions from sample no. 0 to Nw0/2 (shown by the solid line in FIG. 13A) is stored at the window function table 21. Further, when generating the remaining part of the master window functions (shown by the broken line in FIG. 13A), it is possible to read out the window function table 21 in the reverse order so as to generate the remaining part of the master window functions. This enables the table size to be reduced to about half.

As clear from FIG. 13B, the half part of the master window functions from the sample no. 0 to Nw0/2 also has point symmetry about the sample no. (time) = Nw0/4 and attenuation coefficient = (1+a)/2.

Therefore, only the one-quarter of the master window functions from the sample no. 0 to NwO/4 (shown by the solid line in FIG. 13B) is stored in the master window function table 21. When generating the remaining part of the master window functions, it is possible to change the order of reading the window function table 21 and apply simple linear processing to the read out function values so as to generate the remaining part of the window functions.

Alternatively, it is possible to read out the window function table 21 while changing the order and add/subtract the thus read out function values with a constant so as to generate the remaining part of the window functions. This enables the table size to be reduced to about one-quarter.

For example, in the example shown in FIG. 13B, only the part defined in the range R1 (0≤n≤Nw0/4; n is the sample no.) in the window functions corresponding to the window functions shown in FIG. 5 is stored in the window function table 21.

Further, when generating a master window function for the part of the range R2 (Nw0/4≤n≤Nw0/2), the values of the function values read out in the reverse order from the window function table 21 subtracted from the constant (1+a) are computed as function values. Further, when generating master window functions for the part of the range R3 (Nw0/2≤n≤3Nw0/4), the values of the function values read out in the forward order from the window function table 21 subtracted from the constant (1+a) are used as function values. Further, when generating master window functions for the part of the range R4 (3Nw0/4≤n≤Nw0), the values read out in the reverse order from the window function table 21 are used as function values.

The window function calculator 24 reads out part of the master window functions stored in the window function table 21 in this way and can compute all of the master window functions by simple linear processing of the window function table 21 while changing the read out order based on symmetry of the master window functions.

Further, the window function calculator 24 changes the amplitude of the master window functions in accordance with the detection level detected by the level detector 11 and changes the period widths of the master window functions in accordance with the period widths of the peak parts detected by the period width detector 14.

Further, the window function calculator 24 generates window functions in accordance with the timing so as to multiply the centers of the window functions with the multicarrier signal at the peak positions detected by the peak position detector 13.

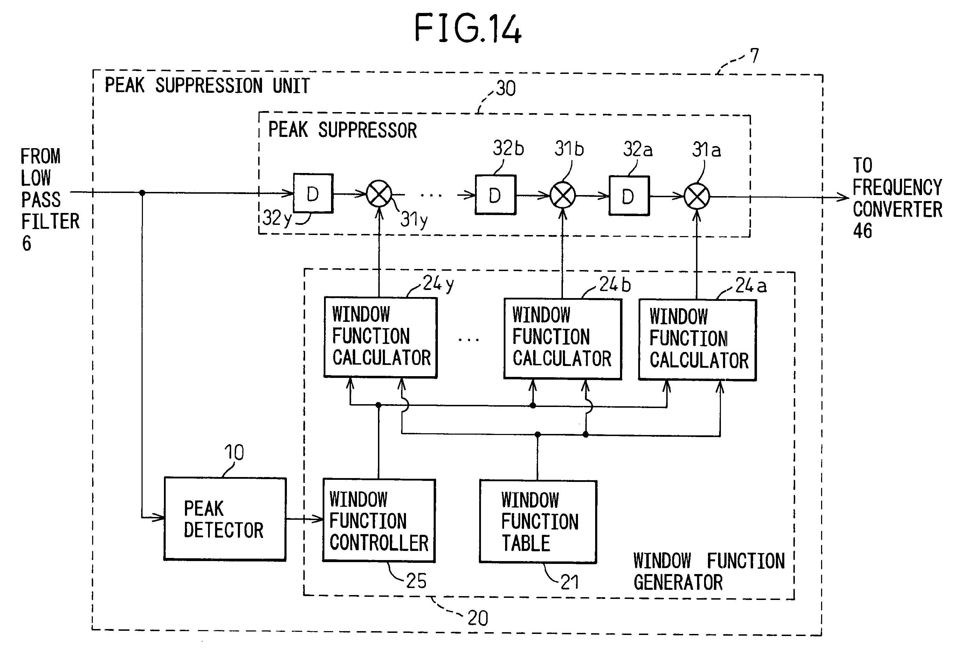

FIG. 14 is a schematic view of the configuration of a sixth example of the configuration of the peak suppression unit 7 shown in FIG. 1. This example can superpose the window functions generated at the plurality of peak parts appearing at different times (positions of samples) of the input signal and multiply them with the input signal.

Therefore, the window function generator 20 is provided with a window function table 21, a plurality of window function calculators 24a, 24b... 24y, and a window function controller 25 for controlling these window function calculators 24a to 24y.

Further, the peak suppressor 30 is provided with multipliers 31a, 31b... 31y for multiplying the window functions generated by the plurality of window function calculators 24a, 24b... 24y with the multicarrier signal and delay elements 32a, 32b... 32y.

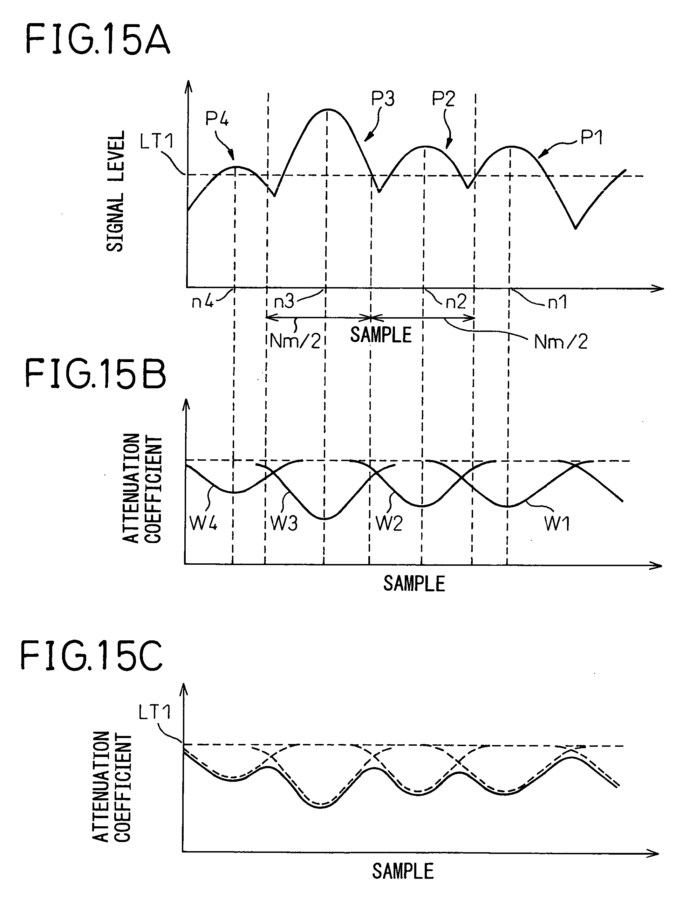

The operation of the multicarrier peak suppression unit 7 shown in FIG. 14 will be explained next referring to FIGS. 15A to 15C. FIG. 15A shows an input signal before peak suppression by the peak suppression unit 7, FIG. 15B shows window functions multiplied with the peak parts of the signal of FIG. 15A, and FIG. 15C shows the amount of attention by the window functions of FIG. 15B.

As shown in FIG. 15A, the input signal has a plurality of peak parts P1 to P4 appearing in it. Assume that window functions w1 to w4 are generated corresponding to the peak parts P1 to P4. Here, if the peak parts appear at intervals shorter than the maximum period width of the window functions, the window functions w1 to w4 can overlap as shown in FIG. 15B. In the illustrated example, the window functions w1 and w2, w2 and w3, and w3 and w4 overlap at their outskirts.

The peak suppression unit 7 according to the present embodiment generates window functions overlapping in time by different window function calculators 24a to 24y and multiplies these with the multicarrier signal by the multipliers 31a to 31y.

For example, when suppressing the peak parts P1 to P4 of the input signal of FIG. 15A, first, when the peak detector 10 detects the peak part P1 at the sample n1, the window function controller 25 causes the 1st window function calculator 24a to generate a window function w1 at a position centered at the sample n1. The window function controller 25 stores the fact that the window function calculator 24a is in the middle of generating a window function while the window function calculator 24a is generating the window function.

Next, when the peak detector 10 detects the peak part P2 at the sample n2, since the window function calculator 24a is generating a window function, the window function controller 25 causes the second window function calculator 24b to generate a window function w2 at a position centered at the sample n2. The window function controller 25 stores the fact that the window function calculator 24b is in the middle of generating a window function while the window function calculator 24b is generating the window function.

Further, when the window function generator 24a finishes generating the window function, the window function controller 25 clears the memory indicating that window function calculator 24a is generating the window function.

After this, if the peak detector 10 detects a peak part P3 at a sample n3, the window function controller 25 causes the 1st window function calculator 24a to generate the window function w3 at a position centered at the sample n3 again.

By providing the plurality of window function calculators 24a to 24y in this way, the peak suppression unit 7 superposes the function values at certain times of the window functions generated for the plurality of peak parts of the input signal and enables attenuation of the signal levels of the multicarrier signal at these times in accordance with the superposed values. Due to this, it becomes possible to apply window functions to all peak parts appearing at short intervals.

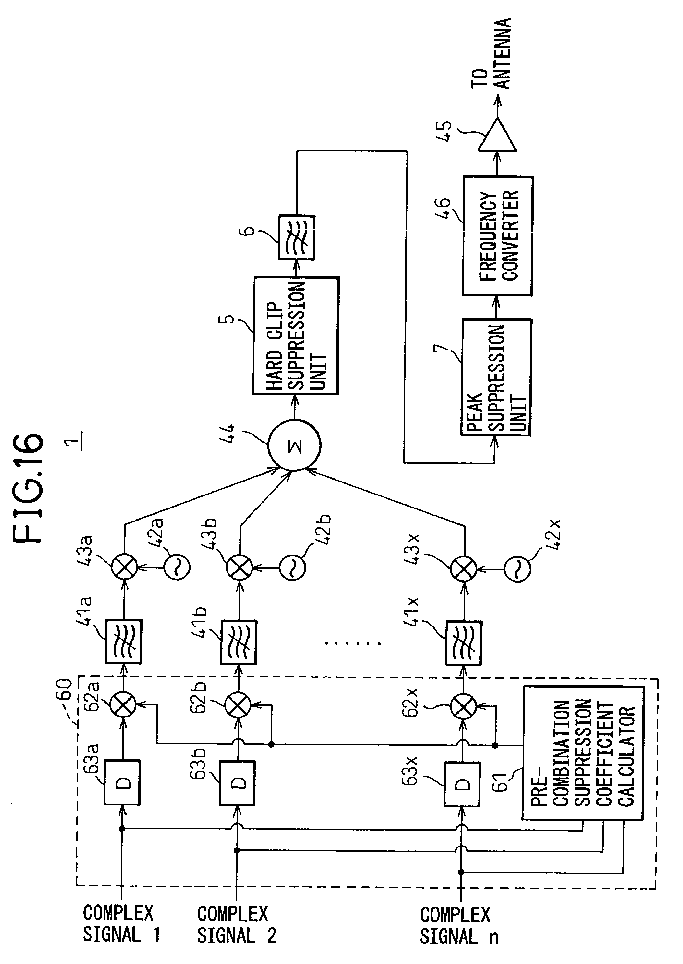

FIG. 16 is a schematic view of the configuration of a second embodiment of a multicarrier signal transmission apparatus according to the present invention. This embodiment performs the peak suppression by hard clipping, a low pass filter, and window function and the peak suppression before multicarrier combination together.

That is, the transmission apparatus 1 according to the present embodiment is provided with, in addition to the above explained hard clip suppression unit 5, low pass filter 6, and peak suppressing means 6, a precombination suppression coefficient calculator 61 for simulating a multicarrier signal occurring when limiting the bands of, then combining the digital signals comprised of the complex signal 1 to complex signal n based on the same so as to determine the peak parks and computing the suppression coefficients (attenuation coefficients) to be applied to the segments of the complex signal 1 to complex signal n corresponding to the determined peak parts, multipliers 62a, 62b... 62x for multiplying the suppression coefficients for the complex signals 1 to n computed by the precombination suppression coefficient calculator 61 with the complex signals (1 to n), and delay elements 63a, 63b... 63x for delaying the complex signals 1 to n by the processing time of the precombination suppression coefficient calculator 61.

The peak suppression before multicarrier combination has the advantage of there being no deterioration of the ACLR since the peak suppression is applied before the band-limiting filters 41a, 41b... 41x, but has the disadvantage that the deterioration of the quality of reception is large since the amount of information lost due to peak suppression is large.

In the present embodiment, by performing peak suppression before multicarrier combination with little deterioration of the ACLR along with hard clipping with little deterioration of the quality of reception, it becomes possible to control the balance between the quality of reception and ACLR well.

By combining peak suppression by hard clipping and peak suppression using filtering by a low pass filter and a window function like in the peak suppression method according to the present invention, peak suppression of a multicarrier signal with a good balance of the quality of reception and ACLR becomes possible.

The present invention can be broadly applied to transmission apparatuses and transmission methods for signals combining pluralities of modulated signals, but is particularly suitably applied to the CDMA communication scheme (including W-CDMA scheme) for utilizing a multicarrier signal for high speed packet transmission.

While the invention has been described with reference to specific embodiments chosen for purpose of illustration, it should be apparent that numerous modifications could be made thereto by those skilled in the art without departing from the basic concept and scope of the invention.

## Claims

1. A multicarrier signal transmission apparatus (1) for limiting the bands of a plurality of modulated signals, combining these, and transmitting the obtained multicarrier signal, comprising:
a hard clip suppression unit (5) for hard clipping a peak part of said multicarrier signal,
a low pass filter (6) for filtering said signal hard clipped by said hard clip suppression unit (5), and
a peak suppression unit (7) for suppressing said peak part of the signal after filtering by said low pass filter (6),
said peak suppression unit (7) provided with:
a peak detection unit (10) for detecting a peak part of said filtered signal,
a window function generation unit (20) for generating a window function of an amplitude in accordance with a peak level of said peak part, and
a peak suppressor (30) for attenuating said peak part in accordance with the value of said window function.

2. A multicarrier signal transmission apparatus as set forth in claim 1, wherein said window function generation unit (20) generates a window function of a period width in accordance with a period width of the detected peak part.

3. A multicarrier signal transmission apparatus as set forth in claim 1, wherein
said peak suppression unit (7) is further provided with a window function table (21) storing values of a master window function for generating said window function and
said window function generation unit (20) generates a window function by changing an amplitude of the window function in said table (21) in accordance with a peak level of said detected peak part.

4. A multicarrier signal transmission apparatus as set forth in claim 3, wherein said window function generation unit (20) generates said window function by changing a period width of said master window function in accordance with a period width of said detected peak part.

5. A multicarrier signal transmission apparatus as set forth in claim 1, wherein
said window function table (21) stores part of window functions having symmetry, and
said window function generation unit (20) generates all of said window functions based on said symmetry from said part of the window functions stored in said window function table (21).

6. A multicarrier signal transmission apparatus as set forth in claim 1, wherein said peak suppressor (30) superposes function values at certain times of said window functions generated on the plurality of peak parts of said filtered signal and attenuates the signal level of said filtered signal at said times in accordance with the superposed values.

7. A multicarrier signal transmission apparatus as set forth in claim 1, wherein said window function is any one of a cos window function, cos² window function, cos³ window function, cos⁴ window function, Hanning window function, Hamming window function, Kaiser window function, and Blackman-Harris window function.

8. A multicarrier signal transmission apparatus as set forth in claim 1, further comprising
a peak part determining unit (61) for determining a peak part of a multicarrier signal when combining a plurality of modulated signals based on those signals and
a modulated signal attenuating unit (62a, 62b, 62x) for attenuating a signal level of a part of each of said plurality of modulated signals corresponding to the determined peak part.

9. A multicarrier signal transmission method for limiting bands of a plurality of modulated signals, combining these, and transmitting an obtained multicarrier signal, comprising:
hard clipping a peak part of said multicarrier signal,
filtering said hard clipped signal by a low pass filter (6),
detecting a peak part of said filtered signal,
generating a window function of an amplitude in accordance with a peak level of said peak part, and
attenuating said peak part in accordance with the value of said window function, and
transmitting the signal with the peak part attenuated.

10. A multicarrier signal transmission method as set forth in claim 9, further comprising generating a window function of a period width in accordance with a period width of said detected peak part.

11. A multicarrier signal transmission method as set forth in claim 9, further comprising
storing values of a master window function for generating said window function in a window function table (21) in advance and
generating said window function by changing an amplitude of the window function in said table (21) in accordance with a peak level of said detected peak part.

12. A multicarrier signal transmission method as set forth in claim 11, further comprising generating said window function by changing a period width of the master window function in accordance with a period width of said detected peak part.

13. A multicarrier signal transmission method as set forth in claim 11, comprising
storing a part of window functions having symmetry in said window function table (21), and
generating all of said window functions based on said symmetry from said part of the window functions stored in said window function table.

14. A multicarrier signal transmission method as set forth in claim 9, comprising attenuating said peak parts by superposing function values at certain times of said window functions generated on the plurality of peak parts of said filtered signal and attenuating the signal level of said filtered signal at said times in accordance with the superposed values.

15. A multicarrier signal transmission method as set forth in claim 9, further comprising using as said window function any one of a cos window function, COS² window function, cos³ window function, cos⁴ window function, Hanning window function, Hamming window function, Kaiser window function, and Blackman-Harris window function.

16. A multicarrier signal transmission method as set forth in claim 9, further comprising
determining a peak part of a multicarrier signal when combining a plurality of modulated signals based on those signals and
attenuating a signal level of a part of each of said plurality of modulated signals corresponding to the determined peak part.
